# EUROPEAN PATENT SPECIFICATION

(11) **EP 1 601 136 B1**
(45) Date of publication and mention of the grant of the patent: **05.07.2006**
(21) Application number: 04291311.1
(22) Date of filing: 24.05.2004
(51) Int. Cl.: H04L 12/28, H04Q 7/30

(54) **Wireless data routing between access points for a railway**
Drahtlose Datenweiterleitung zwischen Zugangspunkten für eine Eisenbahn
Routage de données via des points d'acces sans fil pour un réseau ferroviaire

(43) Date of publication of application: 30.11.2005
(73) Proprietor: ALCATEL, 75008 Paris (FR)
(72) Inventor: Böttle, Dietrich, 73084 salach (DE); Halbauer, hardy, 76275 Ettlingen (DE); Cesar,Bozo, 70439 Stuttgart (DE)
(74) Representative: Brose, Gerhard

(56) References cited:
- US-A1- 2003 195 005
- US-A1- 2003 210 671
- US-B1- 6 226 518
- WU H ET AL: "INTEGRATED CELLULAR AND AD HOC RELAYING SYSTEMS: ICAR" IEEE JOURNAL ON SELECTED AREAS IN COMMUNICATIONS, IEEE INC. NEW YORK, US, vol. 19, no. 10, October 2001 (2001-10), pages 2105-2115, XP001111273 ISSN: 0733-8716

## Description

The present invention relates to a cellular broadband wireless access network for a railway and for a train. The present invention further relates to a method, a computer software product and an access point, therefore.

Communication with party sited in a train places high demands on effective wireless roaming because of the high-speed mobility. Unlike a home or office environment, where roaming is rare and deferred communication is tolerated, communication means for trains faces demands an environment where roaming is a certainty and often occurs at very high speeds. Continuous reliable wireless connection with seamless roaming handover and sustained communication for smooth operation is required.

Known mobile communication systems like the Universal Mobile Telecommunications System (UMTS) envisioned as the successor to Global System for Mobile Communications (GSM) addresses such demand of mobile Internet connectivity.

In order to serve this demand for example the UMTS terrestrial radio access (UTRA) has a wide-band code division multiple access (W-CDMA) radio interface. UTRA supports time division duplex (TDD) and frequency division duplex (FDD). A radio access network UMTS terrestrial radio access network (UTRAN) is connected to a core network (CN) using a cascading style. There are two network elements a radio network controller (RNC) and a node B. UTRAN is subdivided into individual radio network systems (RNSs), where each RNS is controlled by an RNC. The RNC is connected to a set of node B elements, each of which can serve one or several cells.

Similarly local area networks (LANs) provide a wireless client freedom of movement. The network includes multiple wireless access points, usually connected to an (Ethernet) aggregation switch. The Ethernet aggregation switch is virtual local area network (VLAN) aware and matches client traffic from connected access points with access VLANs. A virtual network switch maintains an association table between access VLANs and core VLANs. The virtual network switch uses the association table to manage free-form client traffic between mobile stations at access VLANs at connected Ethernet aggregation switches and appropriate core VLANs.

Fast handover methods are known where a wireless local area network system includes a plurality of base stations connected in a wired local area network. A mobile wireless station can roam through communication cells defined by the base stations. The base stations transmit beacon messages at regular intervals. The mobile station determines the communications quality of the beacon message for the cell in which the mobile station is currently located and if this quality becomes unacceptable, switches to a search mode wherein beacon messages from any base station are received and their communications quality is determined. The mobile station switches to communicate with a base station providing a beacon message with an acceptable communications quality.

A current trend in applying the implementation of an open radio frequency (RF) communication technology in the harsh railway environment application context of train Internet based on the Institute for Electrical and Electronics Engineers (IEEE) standards, adopted for trains moving in excess of 120 km/h and beyond.

The communication system is preferably an integrated seamless Ethernet-IP (Internet Protocol) network that includes both a wired (copper, fiber, or any other wired medium) and a wireless (radio, infra red, or any other electromagnetic field) components.

The communication system is comprised of three distinct elements: a radio link, a wayside network (running adjacent to the track and providing a link between wayside applications and trackside radios) and a train internal local area network.

A system is described in CA 2299778 where there ore four components mentioned : a fixed wayside network; a mobile network; wireless interconnecting means; and open standards-based protocol means.

Similarly such a system with wireless connectivity and a method of managing data network flow is known from the United States Potent Application U5 2003/0210671 A1. A radio transmission system and a routing method for configuring a radio network with relay nodes is known from the United States Patent Application US 2003/O195005 Al.

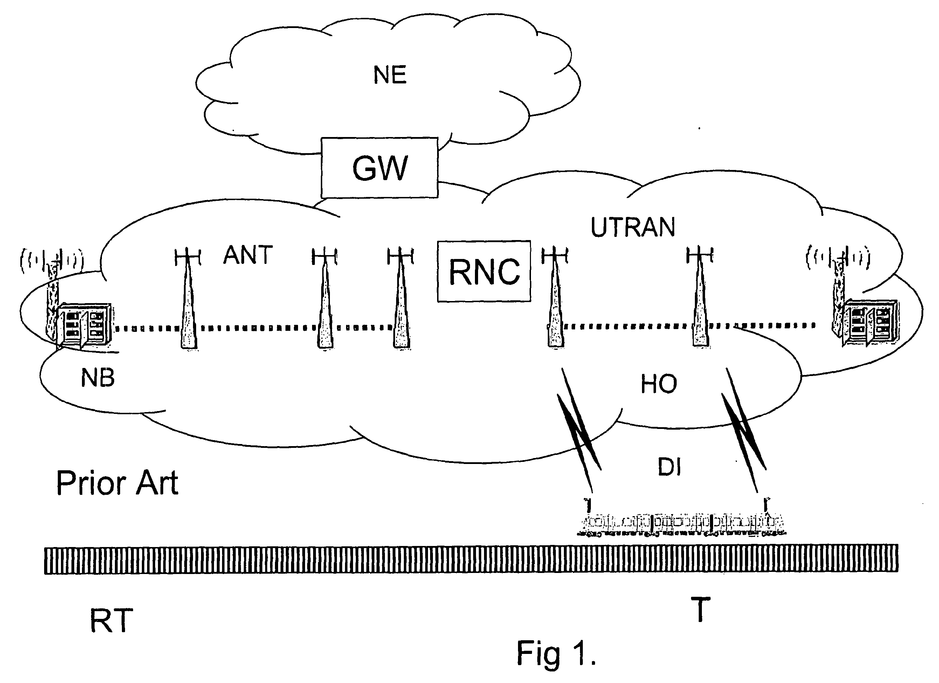

Current communication system is a combination of wired access points combination with aggregating network elements in an wired mostly fiber-optic cabling) access network, as shown in Figures 1, 2, and 3.

An access point is considered as a hardware device or a computer's software that octs as a communication hub for users of a wireless device to connect to a network for extending the physical range of service a wireless user has access to. In this sense also a node B or generally a base station as well as a satellite is considered as an access point.

A gateway is a node in a network that serves as an entrance to another network.

Roaming is a term in radio communication hat defines the changing of a mobile end-user's device from one fixed access point to another.

Mobile users typically 'roam' in a moving train when their ongoing conversation or connection is transferred from one antenna to the next when the first antenna's signal becomes too weak, hopefully without interrupting the logical connection, e.g. a call.

This radio frequency (RF) communication technology is commonly known as WLAN the acronym for wireless local-area network. A type of local-area network that uses high-frequency radio waves rather than wires to communicate between nodes. There are a bunch of new WLAN standards like Wi-Fi or Wi-Max.

For instance, IEEE 802.1 supports up to 2Mbps in the 2.4GHz band. It uses for frequency-hopping spread spectrum (FHSS) as well as direct-sequence spread spectrum (DSSS) . FHSS is a type of spread spectrum radio, where the data signal is modulated with a narrowband carrier signal that "hops" in a random but predictable sequence from frequency to frequency as a function of time over a wide band of frequencies. The signal energy is spread in time domain rather than chopping each bit into small pieces in the frequency domain. This technique reduces interference because a signal from a narrowband system will only affect the spread spectrum signal if both are transmitting at the same frequency at the same time. DSSS is a transmission technology where a data signal at the sending station is combined with a higher data rate bit sequence, or chipping code, that divides the user data according to a spreading ratio. The chipping code is a redundant bit pattern for each bit that is transmitted, which increases the signal's resistance to interference.

IEEE 802.1 1 a also called Wi-Fi is suited for rates up to 54Mbps in the 5GHz band. There Orthogonal Frequency Division Multiplexing (OFDM), an modulation technique for transmitting large amounts of digital data over a radio wave. OFDM works by splitting the radio signal into multiple smaller sub-signals that are then transmitted simultaneously at different frequencies to the receiver. OFDM reduces the amount of crosstalk in signal transmissions.

Another Wi-Fi standard is IEEE 802.11b providing rates up to 11Mbps in the 2.4GHz band using DSSS with complementary Code Keying (CCK), where a set of 64 eight-bit code words used to encode data for 5.5 and 1 1 Mbps data rates in the 2.4GHz band of 802.11 b wireless networking. The code words have unique mathematical properties that allow them to be correctly distinguished from one another by a receiver even in the presence of substantial noise and multipath interference, and represent a greater volume of information per clock cycle.

The next is IEEE 802.11 g providing up to 54Mbps in the 2.4GHz band OFDM above 20Mbps, DSSS with CCK below 20Mbps.

All the above standards and their implementations provide adequate network connectivity under the assumption of very limited roaming, i.e. within the coverage of an access point. The target is to provide network connectivity along a railway for a fast moving train avoiding the complex and maintenance intensive wiring.

This problem is solved by a cellular broadband wireless access network for a railway / train comprising a plurality of access points along the railway defining respective cells of the wireless communications network, where the access points are connected to a network gateway via an aggregation network to at least one gateway, where an access point is equipped with radio interface means supporting inter-communication between neighbor/adjacent access points and communication to network units within its cell, a first part of the access points are connected to a network gateway via the aggregation network directly, a second part of the access points are indirectly connected to a network gateway via inter-communication over at least one other access point to an access point of the first part of access points, and that the broadband wireless access network comprising control means for routing the communication between the access points and the at least one gateway for a roaming network unit.

And this problem is solved by an access point for use in a cellular broadband wireless access network for a railway/train, the wireless access network comprising a plurality of access points along the railway defining respective cells of the wireless communications network, where the access point is equipped with radio interface means supporting inter-communication between neighbor/adjacent access points and communication to roaming network units within its cell, the access point comprising switching means, first radio interface means integral to the switching means for supporting communications between the access point and a roaming network unit, and second radio interface means integral to the switching means for providing an inter-communication between neighbor/adjacent access points. Preferably the access point comprises further control means for routing communication between the access points and a gateway via inter-communication between neighbor/adjacent access points.

And the problem is solved by a method for controlling a cellular broadband wireless access network comprising at least one gateway connected via an aggregation network to access points. The method comprising the steps of determining for a roaming network unit at least one access point such that the roaming network unit is located in the cell of the at least one access point, and routing communication between a gateway and the roaming unit via the at least one access point over the aggregation network. Only a first part of the access points are connected to a network gateway via the aggregation network directly, a second part of the access points are indirectly connected to a network gateway via inter-communication over at least one other access point to an access point of the first part of access points. The method comprising further the steps of determining a second access point of the first part of the access points and routing communication between a gateway and the roaming unit via inter-communication of the second part of the access points to the at least one access point. Preferably roaming network unit is tracked for performing a fast or even predictive determining of the at least one access point or the second access point.

And this problem is solved by a computer software product that performs this method.

Accordingly, it is an object and advantage of the present invention to avoid high effort and cost for the installation and maintenance of fiber and/or wire line network connecting access points.

Another advantage of the present invention is since the access points are interconnected via radio links (multi-hops) and the activation of hops could be driven from the moving vehicle (information to be transferred from/to the vehicle switched from hop to hop), the network is canonically homomorph to the rail way plan. That ovoids complex network planning. And the access network is self-organized since when the railway is modified the network modifies accordingly by replacing the access points along the modified railway.

A further advantage of the present invention is that for most of the access points only power supply is necessary which is already available along most rail ways.

These and many other objects and advantages of the present invention will become apparent to those of ordinary skill in the art from a consideration of the drawings and ensuing description, where
Figure. 1 is a drawing of a prior art UMTS mobile network.
Figure. 2 is a drawing of prior art WLAN access network.
Figure. 3 is a drawing of prior art satellite access network.
Figure. 4 is a schematic drawing of a wired prior art access network.
Figure. 5 is a schematic drawing of a cellular broadband wireless access network for a railway and a train according to the invention.
Figure. 6 is a schematic drawing of access points according to the invention.
Figure. 7 illustrates the method according to the invention.
Figure 8 is a schematic drawing of a train equipment of the access network according to the invention.

In order to provide e.g. high bit rate Internet connectivity of vehicles moving at high speed, like trains, a bunch of wireless network techniques are known.

Figure. 1 shows for instance an UMTS access network UTRAN comprising some access points NB usually called base stations or node Bs. Each node B NB has supports antennas and has access to a network NE, the core network via a gateway GW. An radio network controller RNC in common with the node B NB controls the network access, especially macro diversity and handover for a roaming (moving) train T. The train T on the railway RT has two antennas, each (in the figure) linked to a fixed antenna. The duplicate connection, shown by the black flashes, on both, the train side and the rail side is advantageous for hand over HO as well as for improving connection and quality of service by e.g. by applying diversity techniques like macro diversity (over a plurality of access points, usually managed in an controlling network aggregation element) and micro diversity (over multiple antenna through the same access point by applying differential amplification, fingering, and similar radio frequency techniques).

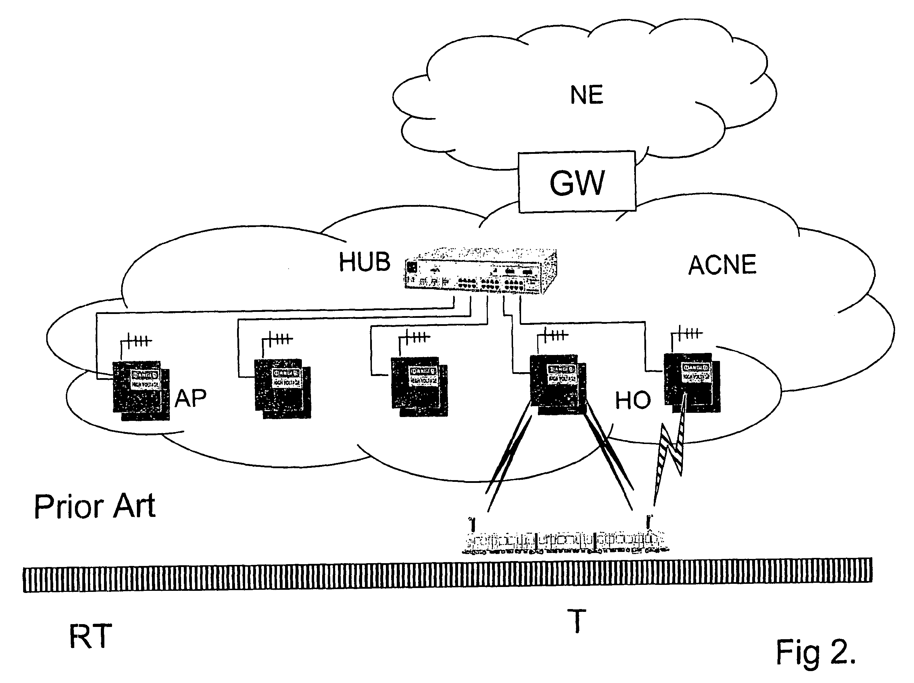

Figure. 2 shows another Wi-Max access network ACNE, comprising bridges HUB that are connected via a gateway to a network where each access point AP is separately wired connected to a network bridge HUB. The access points AP provide a radio connection, shown by the flashes, with the train T. Such a network also needs for fast roaming a kind of network controller to manage handover HO scenarios.

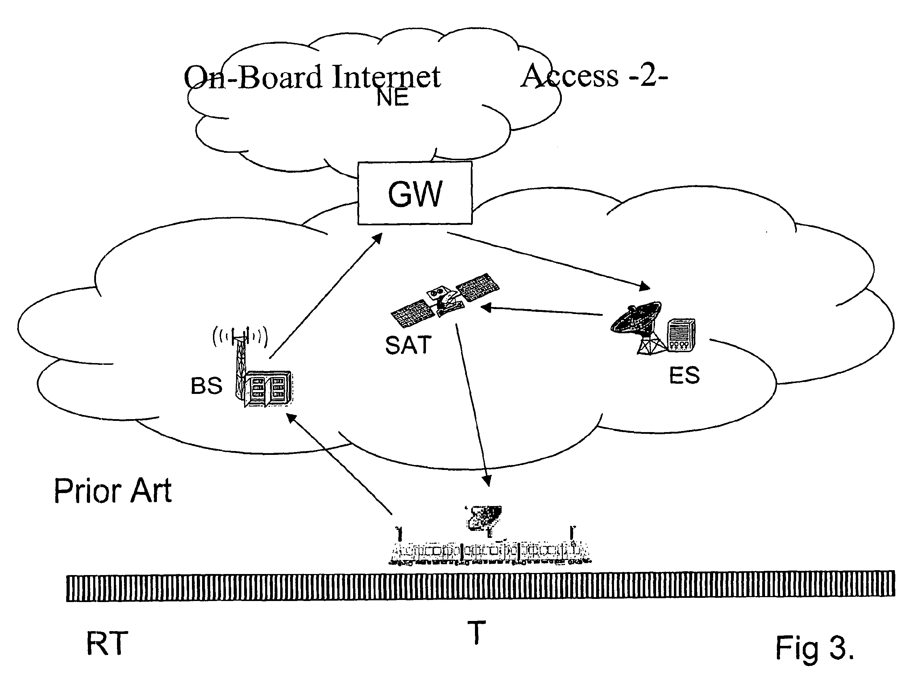

Figure. 3 shows an alternative access network comprising a satellite SAT, a base station BS, and an earth station ES. The uplink access is routed from the gateway GW to the earth station ES and from there via the satellite SAT to the train T. The down link is routed from the train T via a GSM/GPRS connection to a base station BS to the gateway. This solution requires a satellite receiver and GSM/GRPS sender equipment at the train site. It uses the large coverage of an high capacity satellite link.

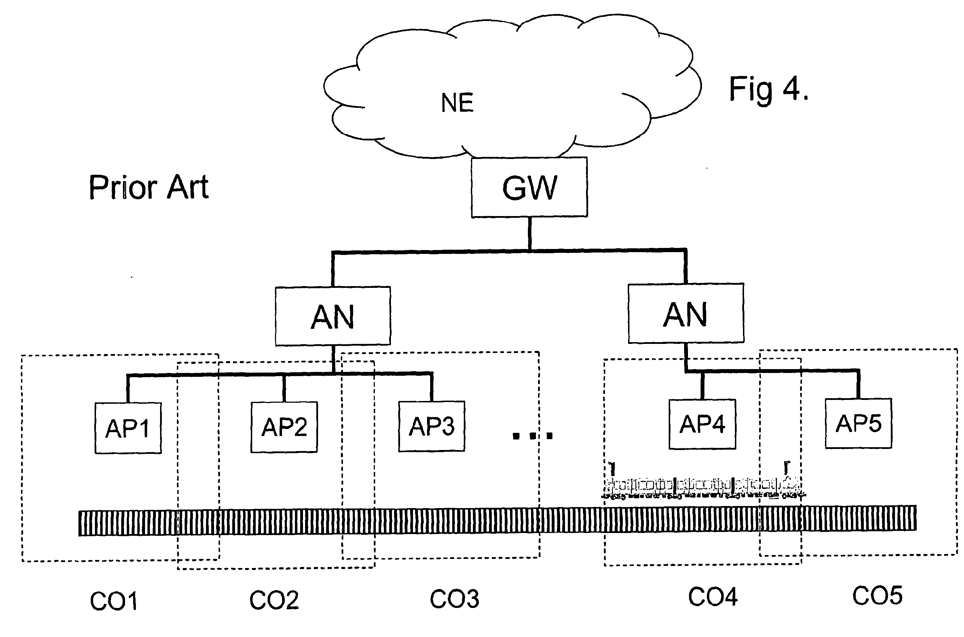

Figure. 4 shows the common structural properties of these prior art access networks. Access networks have an access gateway GW to another network NE. The access networks have aggregation functionality provided by a hierarchical (wired) structure comprising aggregation nodes AN. And the access network comprising a set of (wired) access points AP1, AP2, ..., AP5 each having a certain coverage CO1, CO2, ..., COS, respectively. The spanned area, illustrated by the dashed square is also called cell. And the areas are arranged that the common coverage cover the whole railway. Cell overlapping is used for handover.

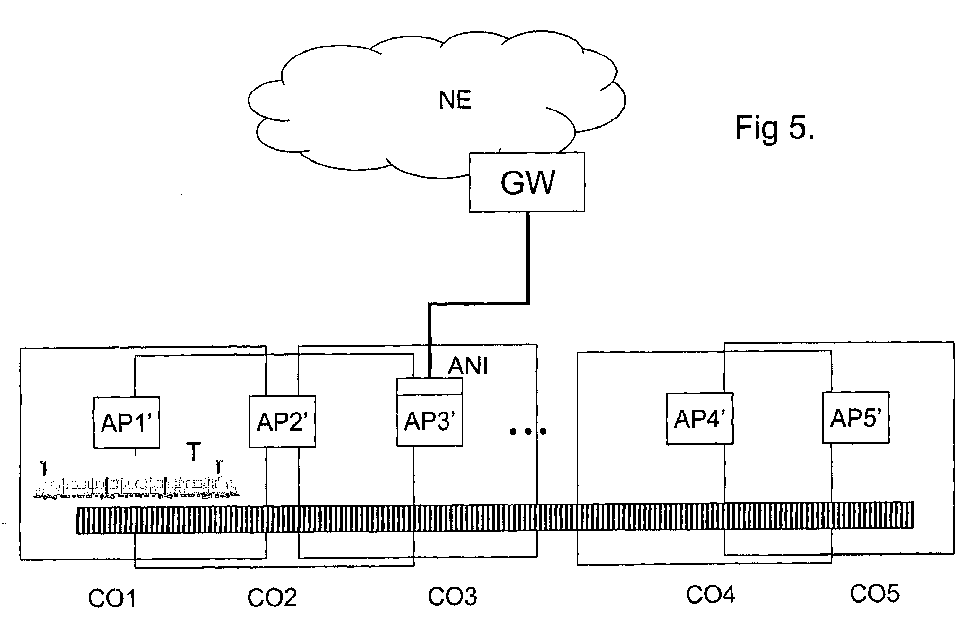

Figure. 5 illustrates the idea behind the invention. The access points are arranged that adjacent access points AP1', ..., AP5' are within their coverage CO1', ..., CO5'. That means for instance that the access point AP1' closest to a train T can establish an radio link to the train T and to its adjacent access point AP2'. This access point AP2' can establish in advance an radio link to the next adjacent access point AP3'. This access point AP3' has a aggregation network interface ANI enabling a connection to an gateway GW and finally to a network NE.

The connections between the aggregation network and the vehicle are in the state-of-the-art either fibers or wires (thick lines in figures 1 to 5) to feed the access points. Access point wiring causes high effort for installation. The basic idea is to interconnect the access points through radio links forming multiple hops between the access points. In "standard" hop configurations along a (linear) railway) the capacity at the'first' node is the sum of all following sub node capacities. For railways there is typically only one vehicle in a linear railway network segment and thus there is no capacity cumulating. Generally, there are only few forks within railway networks and a limited traffic, i.e. no aggregation of trains on one railway section. This enables to reduce for the access network the expensive access point wiring and allows to minimize the number of access points equipped with an aggregation network interface ANI.

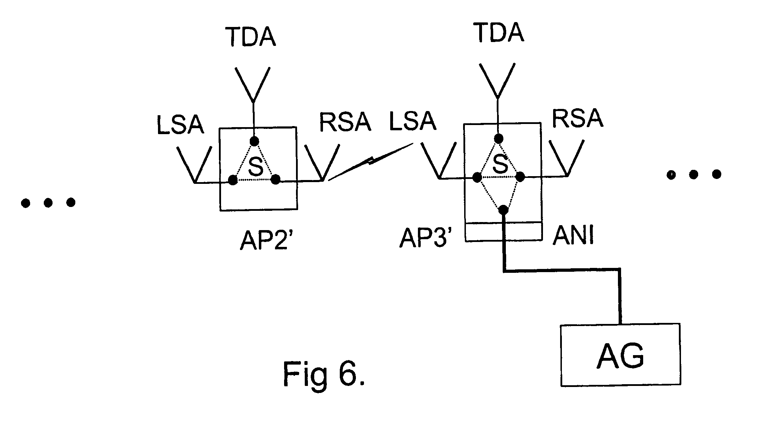

Figure 6 shows two access points AP3' and AP2' schematically in detail. Both access points AP3' and AP2' comprises each a train directed antenna TDA a left hand side antenna and a right hand site antenna, as well as a switch S. The aggregation network access point AP3' has also an aggregation network interface ANI to its switch that is wired to an aggregation network element AG.

The switch enables the access point AP3' and AP2' to act either as relays transferring signals to the next access point. In case the access point does not transfer the signal to the next one it transmits and receives the signals to/from the train via the train directed antenna TDA. The train transmits control signals to the nearest access point indication his position. This control signal indicates to an access controller or an central access controller the position of the train and these controllers can control the behavior of the switches S of the access points AP3' and AP2' acting as relay or final stage for transferring the signal to/from the train.

In principal the signal is "moving" from access point to access point synchronous to the moving vehicle.

The control of the switches S cold be local or globally managed, i.e. by distributed controllers or a central controller due to the network topology. The controllers might even handle diversity access and handover, e.g. based on train schedules or available train location measurements in a predictive manner. This might be for instance supported by a train tracking system.

Note that the multiple antennas shown in the drawing are only for illustration purposes.

The whole access network is build by aggregation network elements, e.g. Ethernet hubs/switches aggregate the interconnection of the radio access points AP3' with aggregation network interface and wayside control units forming a high-speed backbone. The numerous access points AP2' without aggregation network interface are indirectly interconnected by connecting them to the aggregation network via the access points AP3' with aggregation network interface to establish full radio connectivity.

The access points are typically placed at fixed locations and serve as the access interface between the wireless coverage area and the aggregation network. The access points can be subjected to damp and/or dusty conditions in tunnels and to harsh weather conditions. These radios are housed usually in enclosures, which meet established railway standards for thermal and vibration resistance.

The mobile component of the wireless solution is installed as an integral part of the train. Preferably located at both ends of a train, each radio is connected to two antennas to ensure diversity. Using antenna diversity, two independent wireless signals can be received and compared, e.g. the better of the two signals is then used. This is especially important in harsh environments where noise, obstacles, bad weather and multi-path reflections exist as well as for handover situations.

IEEE 802.11 supports three physical layers: FHSS, DSSS, and infrared. All incorporate a common medium access control layer. Preferably FHSS is used in preference to DSSS because it is a robust technology with little influence from noise, reflections, radio stations or other environmental factors. In addition, the number of simultaneously active systems in the same geographic area (collocated systems) is significantly higher than for DSSS systems.

DSSS radios operate using 22 MHz of bandwidth per channel; if the receiver picks up a narrowband interference signal anywhere in the 22 MHz operating band, the entire band is affected. Thus only three discrete channels or up to seven overlapping channels can be collocated. In contrast, FHSS radios only use 1 MHz channels, so the presence of a narrowband interference signal on a specific frequency will only affect one hop. If the FHSS receiver is unable to operate on a specific hop, the radio will only transmit on the next hop and the receiver will receive it on that hop.

Since FHSS radios are less sensitive to signal delays, they are more tolerant of noise and multi-path reflections than are DSSS radios. FHSS uses both time and frequency diversity, so any retransmissions use a different hop frequency to ensure successful execution. In addition, FHSS systems are more secure than DSSS systems as they can use up to 79 available frequency channels and a unique hopping sequence, and can accept and apply customized dwell times.

Designing uniform wireless coverage is the foundation for delivering uninterrupted wireless communication. The fundamental principle for maintaining consistent wireless performance is a strategy based on a balanced combination of interference, antenna selection, antenna diversity vs. coverage, and access point location and signal strength.

Any unbalanced combination of these will produce erratic behavior within the wireless coverage area, including irregular mis-associations, an excessive number of retransmissions, an unacceptable number of dropped packets and other unpredictable behavior.

The interference/noise floor is the basis for wireless signal strength requirements as the operation of IEEE 802.11 is based on efficient signal-to-noise ratios. The minimal operational signal strength threshold for an association should be between 12 dBm (decibels referred to 1 milliwatt) and 18 dBm above the identified interference/noise floor. When the level of interference is not uniform across the frequency spectrum, defining the interference/noise floor warrants some additional consideration. A single 22 MHz WiFi channel within the 2.4 GHz spectrum will block approximately 30% of the spectrum, thereby causing retransmissions and potential packet loss. This potential for WiFi interference may expand to three discrete WiFi channels in the same coverage area. In time it could quite possibly increase to full overlapping of collocated coverage areas consisting of 14 WiFi channels.

Multipath interference occurs when a wireless signal traverses more than one path between a receiver and a transmitter. These multiple signals combine in the receiving antenna and the receiver and distort the signal. The effects of receiving multiple signals as a result of the signal traversing several paths are analyzed in both the time and frequency domains. The paths along which the transmitted signal travel differ in length, so the signal propagation time is different for each path, resulting in multiple signals arriving at the receiver at slightly different times. FHSS radios generate a very low rate, 330 ns wide transmission signal, which is less sensitive to delays than the narrow 90 ns pulses employed in DSSS. Consequently, FHSS systems are more robust against multipath effects. FHSS systems use time diversity to retransmit lost packets, until the receiving part acknowledges that they have been received correctly. They also use frequency diversity whereby packets are retransmitted on different frequencies (hops).

As the train is continually moving, another type of diversity merits consideration. Positional diversity occurs when the wireless RF signal quality differs from one instant to another towards or away from the signal from an associated access point.

An antenna gives the wireless system three fundamental properties: gain, direction and polarization. Gain is a measure of the increase in power, direction is the shape of the transmission pattern and polarization relates to the orientation of the antennas. Each type of antenna has different coverage capabilities. As the gain of an antenna increases, there is some tradeoff to its coverage area. Usually high gain antennas can cover longer distances, but only in a particular direction.

There are omni-diredional antenna designed to provide a 360-degree radiation pattern (This type of antenna is used when coverage in all directions is required.), directional antennas (An antenna does not add any power to the signal; it simply redirects the energy it receives from the transmitter. By redirecting this energy, it effectively provides more energy in one direction, and less energy in all other directions.) diversity antenna systems are used to overcome a phenomenon known as multipath distortion or multipath fading. Two identical antennas are located a short distance apart to cover the same physical area.

A diversity antenna system can be compared to a switch that selects one antenna or the other, but never both at the same time. The receiving radio switches continually between the two antennas listening for a valid radio packet. When the radio receives the start sync of a valid packet, it evaluates the sync signal of the packet on that antenna, then switches to the other antenna and evaluates that signal. The radio then selects the best signal and uses only that antenna to receive the remaining part of that packet. When transmitting, the radio selects the same antenna as it used the last time it communicated with that particular radio. If a packet fails, it switches to the other antenna and retransmits the packet.

Roaming / joining thresholds must be set to maintain the appropriate signal-to-noise differential with respect to the interference/noise floor across the entire spectrum. A roaming threshold set below the appropriate signal-to-noise ratio may cause a prolonged access point association to the extent that the train side loses the signal altogether as it passes the access point, thus producing intermittent beacon loss disconnects, rescans and re-associations, resulting in excessive retransmissions and/or dropped packets.

Access point locations and the associated wireless coverage must ensure a uniform end-to-end signal strength to guarantee seamless roaming handover. The distribution of access points along the railway, i.e. along the path of the train will depend on the train's roaming and joining thresholds, which in turn are based on the interference/noise floor.

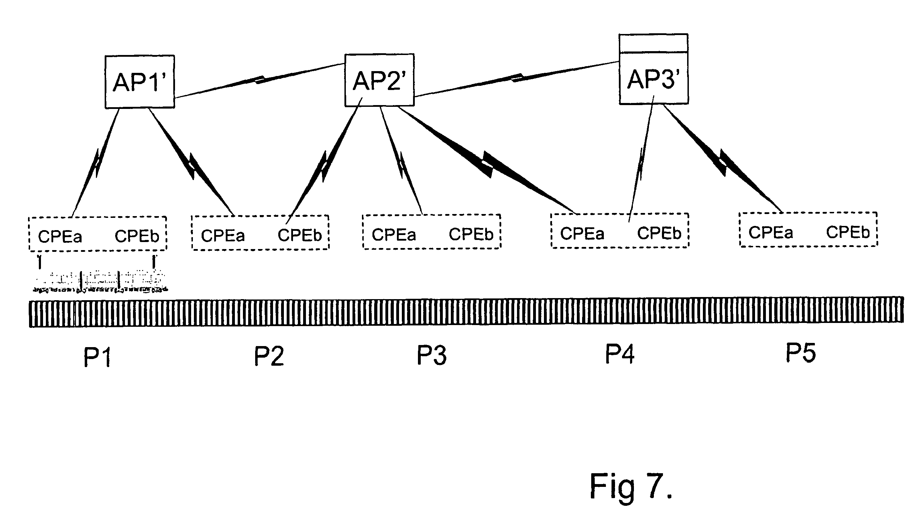

The scenario is shown in figure 7 shows three access points, a first access point AP1', a second AP2', and a third AP3' together with fife positions P1, ..., P5 of a train on a railway, where the train has two antenna, or more precisely two customer premise equipment CPEa and CPEb. The flashes between the train's positions P1, ..., P5 and the access points AP1', AP2', and AP3' illustrate associations.

Access points must provide full track coverage with a consistent minimum signal level above the measured noise floor. A site survey might establish a noise floor within a given environment and includes interference measurements taken from other operators using the same frequency band. Once the noise floor has been established, it is possible to determine the minimum signal coverage required throughout the system; this in turn aids in access point positioning, access point choice, and access point configuration.

The concept of wireless roaming involves a series of associations, disconnects and re-associations. A disconnect between a train and an access point occurs when an existing association is terminated in one of two ways: a roaming disassociation or beacon (signal) loss disconnect.

A disconnect may be initiated by either the train side and/or the access point. Re-association occurs when the train side either re-associates with a new, or the previously associated, access point.

When the train in the figure moves from the first position to the second position P2 position the association between the first access point and the second access and the first customer premise equipment CPEa is maintained. The coverage of the second access point AP2' is entered and an association between the second customer premise equipment CPEb is also established, e.g. for diversity and handover purpose. Since in the example the third access point AP3' has only an aggregation network interface, the second access point has either - like an add dropp multiplexer - to forward trough the inter access node link between the first access point AP1' and the second one AP2' or to support the link to the second customer premise equipment CPEb, or both. At the third position the second access point AP2' serves both customer premise equipment CPEa and CPEb. The forth position P4 is like the second position again a handover scenario.

Each handover (on the air) needs to be appropriately supported by interconnections between access points - ending at an access point having an aggregation network interface.

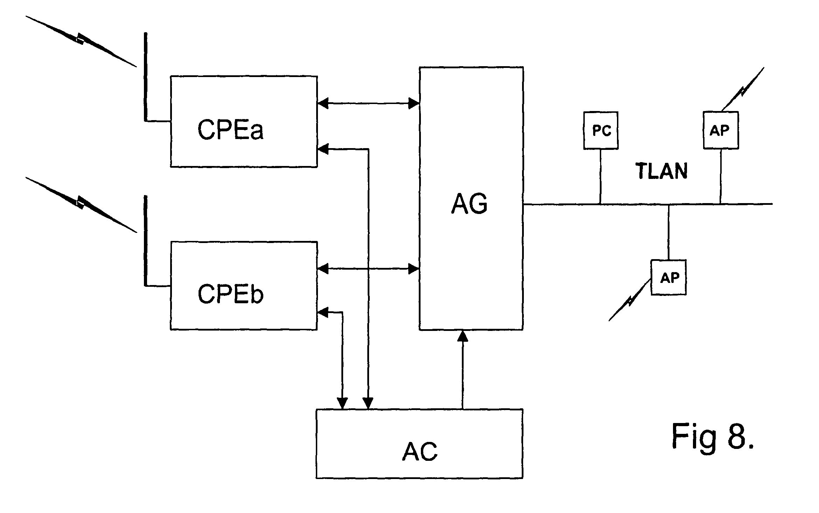

For simplicity reasons a train side needs only be associated with one access point at a time to ensure that it maintains only one connection to the network when the train has a on board local area network as shown in figure 8. In contrast, many trains can be associated with the same access point at the same time.

Figure 8 shows an expletory train side. There are two customer premise equipment CPEa and CPEb connected to an access gatway to a train side local are network TLAN. The train side local are network TLAN comprises e.g. PCs access points for a train related WLAN. An important component is the access controller AC determining / selecting preferred association, controlling (at least partially) handover, and/or controlling diversity procedures.

The IEEE 802.11 specification provides for roaming from the coverage area of one access point to that of another. The conventional roaming logic is based on an election process, where the premise for association with the next best access point is based on moving towards a stronger signal while the existing signal is reducing in strength. While in the roaming mode, the train side selects the next best access point from a list of neighboring access points, at least one of which will have a signal level above the joining threshold. This roaming logic ensures robust and seamless handover in omni-directional cell-based topologies.

Mobile wireless environments utilizing omni-directional antennas that provide access point coverage based on a predetermined path, such as a road or rail track, create a more predictable roaming pattern based on direction and speed. This type of linear roaming moderates the need for a multi-destination, election-based access point selection process, where preferably only one access point should qualify as the next best access point to roam to. An omni-directional wireless RF coverage profile will present a gradual increase in signal strength.

The conventional theory of operation for omni-directional roaming handover is to 'Roam LOW' and 'Join HIGH'. This is based on the notion that as the train moves away from its currently associated access point, the signal level will gradually drop to below the roaming threshold.

Analogous hysteresis is an alternative theory of operation that implies equal roaming and joining thresholds. As the train moves further away from its currently associated access point, the signal falls below the roaming threshold and enters the roaming mode. While in this mode, the train selects the next best access point from a list of stored neighboring access points, each of which has a signal level above the joining threshold and equal to the existing access point's signal level. In this case, the new access point has an equivalent to or stronger signal level than that of the old access point, and the train side continues in the specified direction until the roaming process is triggered again.

This type of operation relies on a common roam/join signal level intersection between the access point coverage areas, and is therefore less tolerant of unbalanced wireless coverage designs. Consequently, measures must be taken to ensure uniform access point signal levels between each of the access points in order to support continual seamless handover.

Reducing the number of access points required to provide wireless service for a specified distance requires the use of multiple unidirectional antennas (facing in opposite directions) per access point. These antennas are either narrow beam, high gain antennas that cover long sections of straight track, or are sectored antennas that are best suited for areas of curved track. The combination of two antennas per access point provides a wireless service to a specific area known as the coverage area. Such configuration supports also the inter access point links.

Since the train can only associate with an access point within its antenna's field, it is essential to properly overlay the access point's coverage area to achieve a seamless roaming handover environment between the access points positioned along the predetermined path.

The application of either conventional or analogous hysteresis in unidirectional wireless environments results in a high probability of producing erratic and unreliable wireless behavior. Roaming in the forward direction, with respect to the orientation of the unidirectional antennas, may produce unreliable roaming handover conditions; the train side might hold it's association with the existing access point for too long then disconnect abruptly as the train passes the access point. Such abrupt disconnects can result in a high probability of retransmission and packet loss.

With the train side configured to Roam LOW and Join HIGH, or to Roam/Join at an EQUAL threshold, the train side will be satisfied with the existing access point's connection and maintain its association with that access point until it passes and subsequently loses that access point's signal.

Roaming in the reverse direction, with respect to the orientation of the unidirectional antennas, presents a functionally stable roaming handover condition for both normal and analogous hysteresis. Movement in the backward direction allows the train side to observe a gradual degradation in the wireless signal strength and roam to the next access point when the appropriate threshold conditions are met.

To overcome the challenges of two-way roaming operation it is proposed inverting the conventional hysteresis roaming logic by configuring the train to Roam HIGH and Join LOW. Then the train will be in a constant state of pro-active roaming to ensure seamless roaming handover as the train moves between access point coverage areas.

In a train environment, mobility is a certainty with uninterrupted data communications across the wireless network being essential for continued operation. Pro-active roaming assures that the uni-directional train will roam to the next access point before losing the signal of the existing access point while traveling in either the forward or backward direction. Since the train is continuously moving, the previous access point will probably not qualify for re-association after a short period of time as it's signal strength will either abruptly disappear or gradually fall below the joining threshold. Setting the roaming threshold parameter to a high value will ensure that it is never satisfied with the current signal level.

Consequently it will always be in a roaming state in which it will examine the table of neighboring access points and attempt to select the most suitable one. Setting the joining threshold parameter to a low value allows the train side to associate with the next access point at a lower signal level, knowing that the next access point's signal will continue to improve. As the approaches the next access point's coverage area, the signal strength of that access point will increase to above the roaming threshold and the train side will associate itself with the next access point.

This demonstrates proactive scanning and roaming along the predetermined path in a seamless fashion. When moving in the forward direction, the train side will associate with the next downstream access point, even though it has a lower signal, before abruptly losing the existing access point's signal as the train passes that access point.

For example, alignment of the intercommunication between the access points to reach a aggregation network could either be distributed organized, e.g. that each access point knows its environment, or centrally organized e.g. by a central network controller that has the information about the train schedule.

Instrumenting the equipment e.g. forming of coverage as well as resource scheduling like frequency dispatching or in general channel dispatching could be done at installation time as well as in an operative or an maintenance mode - in a dynamic way.

An access network controller might even instruct a train side to use a certain set of access points. Since the access points work like add drop multiplexed they could be implemented using a router, a switch, or indeed an add drop multiplexer.

## Claims

1. A cellular broadband wireless access network for a railway/train (RT/T) comprising a plurality of access points (AP1', ..., AP5') along the railway (RT) defining respective cells of the wireless communications network, where the access points (AP1', ..., AP5') are connected via an aggregation network to at least one gateway (GW), where any of the access points (AP1', ..., AP5') ore equipped with radio interface means (LSA, RSA, TDA) supporting communication to rooming network units within its cell, **characterized in that** any of the access points (AP1', ..., AP5') are equipped with radio interface means (LSA, RSA, TDA) supporting inter-communication between neighbor/adjacent access points, a first part of the access points (AP3') are connected to o network gateway (GW) of the at least one gateway via the aggregation network directly, a second part of the access points (AP1', AP2', AP4', AP5') are indirectly connected to the network gateway (GW) via inter-communication over at least one access point of the second part of the access points (AP1', AP2', AP4', AP5') to on access point of the first part of access points (AP3'), and that the broadband wireless access network comprising control means for routing the communication between the access points and the at least one gateway (GW) for a roaming network unit (T), where the conventional roaming logic is inverted by configuring the roaming network unit (T) to room high and join low by setting the roaming threshold to a high value and the joining threshold to a low value enabling a fast handover (HO).

2. The cellular broadband wireless access network according to claim 1, **characterized in that** the roaming network unit (T) is an access point (CPEa, CPEb) on a train (T) that is part of a roaming wireless local area network (TLAN) and that comprises radio interface means and control means (AC) for identifying at least one access point along the railway (RT) for routing the communication between the roaming network unit (T) and the at least one gateway (GW).

3. The cellular broadband wireless access network according to claim 1, **characterized in that** the control means are adopted to perform a smooth handover (HO) by macro diversity (DI).

4. The cellular broadband wireless access network according to claim 1, **characterized in that** the control means are adapted to dispatch the radio resources like time intervals, energy, frequency, for the radio interface means in order to avoid interference for inter-communication between neighbor/adjacent access points as well as communication to roaming network units.

5. An access point (AP1,', ..., AP5') for use in a cellular broadband wireless access network for a railway/train, the wireless access network comprising a plurality of access points (AP1', ..., AP5') along the railway (RT) defining respective cells of the wireless communications network, where any of the access points (AP1', ..., AP5') are equipped with radio interface means (LSA, RSA, TDA) supporting communication to roaming network units within its cell, **chorocterized in that** the access point (AP1,', ..., AP5') is equipped with radio interface means (RSA, LSA, TSA) supporting inter-communication between neighbor/adjacent access points, the access point (AP1,', ..., AP5') comprising switching means (5), first radio interface means (TDA) integral to the switching means for supporting communications between the access point and a roaming network unit, and second radio interface means (RSL, LSA) integral to the switching means (S) for providing on inter-communication between neighbor/adjacent access points, where the access point is adopted to track the rooming network unit (T) with inverted conventional roaming logic to room high and join low by setting the roaming threshold to a high value and the joining threshold to a low value enabling a fast handover (HO).

6. The access point (AP1,', ..., AP5') according to claim 5, **characterized by** further comprising control means for routing communication between the access points and a gateway via inter-communication between neighbor/adjacent access points.

7. The access point (AP1,', ..., AP5') according to claim 6, **characterized in that** the control means for routing the communication are adopted to track the roaming network unit for performing a fast or even predictive handover.

8. A method for controlling a cellular broadband wireless access network comprising at least one gateway connected via an aggregation network to access points (AP1', ..., AP5'), the method comprising the steps of
- determining for a rooming network unit (T) at least one access point (AP1', ..., AP5') such that the roaming network unit is located in the cell of the at least one access point, and
- routing communication between a gateway (GW) and the roaming network unit (T) via the at least one access point over the aggregation network,
**characterized in that** only a first part of the access points (AP3') are connected to o network gateway via the aggregation network directly, a second port of the access points (AP1', AP2', AP4', AP5') are indirectly connected to the network gateway (GW) via inter-communication over at least one other access point to on access point of the first port of access points, the method comprising further the steps of
- determining an access point of the first part of the access points,
- routing communication between a gateway and the roaming unit via inter-communication over said access point, and
- tracking the roaming network unit for performing a fast determining of the at least one access point or the second access point by inverting the conventional rooming logic to room high and join low by setting the roaming threshold to a high value and the joining threshold to a low value.

9. A computer software product **characterized by** comprising a computer readable medium, having thereon computer program code means, when said program is loaded, to make the computer execute procedure to perform the method according to claim 8.

## Patentansprüche

1. Zellulares drahtloses Breitbandzugangsnetz für eine Eisenbahn/Zug (RT/T), das eine Mehrzahl von Zugangspunkten (AP1', ..., AP5') entlang der Eisenbahn (RT) umfaßt, die die entsprechenden Zellen des drahtlosen Kommunikationsnetzes definiert, wo die Zugangspunkte (AP1', ..., AP5') über ein Aggregationsnetz mit mindestens einem Gateway (GW) verbunden sind, wo jeder der Zugangspunkte (AP1', ..., AP5') mit Funkschnittstellenvorrichtungen (LSA, RSA, TDA) ausgerüstet ist, die die Kommunikation mit den Roaming-Netzeinheiten innerhalb ihrer Zelle unterstützen, **dadurch gekennzeichnet, daß** jeder der Zugangspunkte (AP1', ..., AP5') mit Funkschnittstellenvorrichtungen (LSA, RSA, TDA) ausgerüstet ist, die die gegenseitige Kommunikation zwischen benachbarten/angrenzenden zugangspunkten unterstützen, wobei ein erster Teil der zugangspunkte (AP3') mit einem Netzgateway (GW) des mindestens einen Gateways über das Aggregationsnetz direkt verbunden wird, wobei ein zweiter Teil der Zugangspunkte (AP1', AP2', AP4', AP5') indirekt mit dem Netzgateway (GW) über die gegenseitige Kommunikation über mindestens einen Zugangspunkt des zweiten Teils der Zugangspunkte (AP1', AP2', AP4', AP5') mit einem Zugangspunkt des ersten Teils der Zugangspunkte (AP3') verbunden wird, und daß das drahtlose Breitbandzugangsnetz Steuervorrichtungen für das Routing der Kommunikation zwischen den Zugangspunkten und dem mindestens einen Gateway (GW) für eine Roaming-Netzeinheit (T) umfaßt, wo die herkömmliche Roaminglogik durch Konfigurieren der Roaming-Netzeinheit (T) umgekehrt wird, um durch Einstellen des Roaming-Schwellenwertes auf einen hohen Wert und des Verbiridungs-Schwellenwertes auf einen niedrigen Wert high' zu wechseln und 'low' zu verbinden, indem ein schneller Handover (HO) ermöglicht wird.

2. Zellulares drahtloses Breitbandzugangsnetz nach Anspruch 1, **dadurch gekennzeichnet, daß** die Roaming-Netzeinheit (T) ein Zugangspunkt (CPEa, CPEb) auf einem Zug (T) ist, der Teil eines drahtlosen lokalen Netzes (TLAN) für das Roaming ist und der Funkschnittstellenvorrichtungen und Steuervorrichtungen (AC) zum Identifizieren mindestens eines Zugangspunktes entlang der Eisenbahn (RT) zum Routing der Kommunikation zwischen der Roaming-Netzeinheit (T) und dem mindestens einen Gateway (GW) umfaßt.

3. Zellulares drahtloses Breitbandzugangsnetz nach Anspruch 1, **dadurch gekennzeichnet, daß** die Steuervorrichtungen angepaßt sind, um einen reibungslosen Handover (HO) durch die Makrodiversity (DI) durchzuführen.

4. zellulares drahtloses Hreitbandzuganganetz nach Anspruch 1, **dadurch gekennzeichnet, daß** die Steuervorrichtungen angepaßt sind, um die Funkressourcen wie Zeitintervalle, Energie, Frequenz für die Funkschnittstellenvorrichtungen zu steuern, um die Störung für die gegenseitige Kommunikation zwischen benachbarten/angrenzenden Zugangspunkten sowie für die Kommunikation zu Roaming-Netzeinheiten zu vermeiden.

5. Zugangspunkt (AP1', ..., AP5') zur Verwendung in einem zellulaxen drahtlosen Breitbandzugangsnetz für eine Eisenbahn/Zug, wobei das drahtlose Zugangsnetz eine Mehrzahl von Zugangspunkten (AP1', ..., AP5') entlang der Eisenbahn (RT) umfaßt, die die entsprechenden Zellen des drahtlosen Kommunikationsnetzes definieren, wo jeder der Zugangspunkte (AP1', .. , AP5') mit Funkschnittstellenvorrichtungen (LSA, RSA, TDA) ausgerüstet wird, die die Kommunikation zu Roaming-Netzeinheiten innerhalb ihrer Zelle unterstützen, **dadurch gekennzeichnet, daß** der zugangspunkt (AP1', ..., AP5') mit Funkschnittstellenvorrichtungen (RSA, LSA, TDA) ausgerüstet wird, die die gegenseitige Kommunikation zwischen benachbarten/angrenzenden Zugangspunkten unterstützen, wobei der Zugangspunkt (AP1', ..., AP5') Vermittlungsvorrichtungen (S), erste Funkschnittstellenvorrichtungen (TDA) integriert in die Vermittlungsvorrichtungen zum Unterstützen der Kommunikation zwischen dem Zugangspunkt und einer Roaming-Netzeinheit, und zweite Funkschnittstellenvorrichtungen (RSL, LSA) integriert in die Vermittlungsvorrichtungen (S) zum Bereitstellen der gegenseitigen Kommunikation zwischen benachbarten/angrenzenden Zugangspunkten umfaßt, wo der Zugangspunkt angepaßt ist, um die Roaming-Netzeinheit (T) mit der invertierten herkömmlichen Roaminglogik zu verfolgen, um 'high' zu wechseln und 'low' zu verbinden durch Einstellen des Roamingschwellenwertes auf einen hohen Wert und des Verbindungsschwellenwertes auf einen niedrigen Wert, der einen schnellen Handover (HO) ermöglicht.

6. Zugangspunkt (AP1', .... , AP5') nach Anspruch 5; **gekennzeichnet durch** außerdem Umfassen von Steuervorrichtungen für das Routing der Kommunikation zwischen den Zugangspunkten und einem Gateway über die gegenseitige Kommunikation zwischen benachbarten/angrenzenden Zugangspunkten.

7. Zugangspunkt (AP1', ..., AP5') nach Anspruch 6, **dadurch gekennzeichnet, daß** die Steuervorrichtungen für das Routing der Kommunikation angepaßt sind, um die Roaming-Netzeinheiten zum Durchführen eines schnellen oder sogar voraussagenden Handovers zu verfolgen.

8. Verfahren zum Steuern eines zellularen drahtlosen Breitbandzugangsnetzes, umfassend mindestens einen Gateway, der über ein Aggregationsnetz mit den Zugangspunkten (AP1', ..., AP5') verbunden ist, wobei das Verfahren die Schritte umfaßt
- Bestimmen für eine Roaming-Netzeinheit (T) mindestens eines Zugangspunktes (AP1', ..., AP5'), so daß sich die Roaming-Netzeinheit in der Zelle des mindestens einen Zugangspunktes befindet, und
- Routing der Kommunikation zwischen einem Gateway (GW) und der Roaming Netzeinheit (T) über den mindestens einen Zugangspunkt über das Aggregationsnetz,
**dadurch gekennzeichnet, daß** nur ein erster Teil der Zugangspunkte (AP3') mit einem Netzgateway über das Aggregationsnetz direkt verbunden wird, und ein zweiter Teil der Zugangspunkte (AP1', AP2', AP4', AP5') indirekt mit dem Netzgateway (GW) über die gegenseitige Kommunikation über mindestens einen anderen Zugangspunkt mit einem Zugangspunkt des ersten Teils der Zugangspunkte verbunden wird, wobei das Verfahren außerdem die Schritte umfaßt
- Bestimmen eines Zugangspunktes des ersten Teils der Zugangspunkte,
- Routing der Kommunikation zwischen einem Gateway und der Roamingeinheit über die gegenseitige Kommunikation über den Zugangspunkt, und
- Verfolgen der Roaming-Netzeinheit zum Durchführen einer schnellen Bestimmung des mindestens einen Zugangspunktes oder des zweiten Zugangspunktes durch Invertieren der herkömmlichen Roaminglogik, um 'high' zu wechseln und 'low' zu verbinden durch Einstellen des Roamingschwellenwertes auf einen hohen Wert und des Verbindungsschwellenwertes auf einen niedrigen Wert.

9. Computersoftwareprodukt, **gekennzeichnet durch** Umfassen eines maschinenlesbaren Mediums, das darauf Computerprogrammcodevorrichtungen aufweist, wenn das Programm geladen wird, um die Computerausführungsprozedur auszuführen, um das Verfahren nach Anspruch 8 durchzuführen.

## Revendications

1. Réseau cellulaire d'accès sans fil à large bande pour une voie ferrée/un train (RT/T) comprenant une pluralité de points d'accès (AP1', ....., AP5') le long de la voie ferrée (RT) définissant les cellules respectives du réseau de communication sans fil, où les points d'accès (AP1', ...... AP5) sont connectés via un réseau d'agrégation à au moins une passerelle (GW), où n'importe lequel des points d'accès (AP1',.... AP5') est équipé de moyens d'interface radio (LSA, RSA, TDA) supportant la communication vers les unités de réseau d'itinérance à l'intérieur de sa cellule, **caractérisé en ce que** n'importe lequel des points d'accès (AP1',.... AP5') est équipé de moyens d'interface radio (LSA, RSA, TDA) supportant l'intercommunication entre les points d'accès voisins/adjacents, une première partie de points d'accès (AP3') sont connectés à une passerelle de réseau (GW) de la au moins une passerelle via le réseau d'agrégation directement, une seconde partie de points d'accès (AP1', AP2', AP4', AP5') sont indirectement connectés à la passerelle de réseau (GW) via l'intercommunication par au moins un point d'accès de la seconde partie de points d'accès (AP1', AP4', AP5') à un point d'accès de la première partie de points d'accès (AP3'), et **en ce que** le réseau d'accès sans fil comprenant des moyens de contrôle pour le routage de la communication entre les points d'accès et la au moins une passerelle (GW) pour une unité de réseau d'itinérance (T), où la logique d'itinérance conventionnelle est inversée en configurant l'unité de réseau d'itinérance (T) sur itinérance élevée et liaison faible en déterminant le seuil d'itinérance à une valeur élevée et le seuil de liaison à une valeur faible permettant un transfert intercellulaire rapide (HO).

2. Réseau cellulaire d'accès sans fil à large bande selon la revendication 1, **caractérisé en ce que** l'unité de réseau d'itinérance (T) est un point d'accès (CPEa, CPEb) sur un train (T) qui fait partie d'un réseau local sans fil d'itinérance (TLAN) et qui comprend des moyens d'interface radio et des moyens de contrôle (AC) pou identifier au moins un point d'accès le long de la voie ferrée (RT) pour le routage de la communication entre l'unité de réseau d'itinérance (T) et la au moins une passerelle (GW).

3. Réseau cellulaire d'accès sans fil à large bande selon la revendication 1, **caractérisé en ce que** les moyens de contrôle sont adaptés pour effectuer un transfert intercellulaire en douceur (HO) par la macro diversité (DI).

4. Réseau cellulaire d'accès sans fil à large bande selon la revendication 1, **caractérisé en ce que** les moyens de contrôle sont adaptés pour répartir les ressources par radio comme les intervalles de temps, l'énergie, la fréquence, pour les moyens d'interface radio afin d'éviter des brouillages pour l'intercommunication entre les points d'accès voisins/adjacents aussi bien que la communication vers des unités de réseau d'itinérance.

5. Point d'accès (AP1', ......... AP5') destiné à être utilisé dans un réseau cellulaire d'accès sans fil à large bande pour une voie ferrée/un train, le réseau d'accès sans fil comprenant une pluralité de points d'accès (AP1',.... AP5') le long de la voie ferrée (RT) définissant les cellules respectives du réseau de communication sans fil, où n'importe lequel des points d'accès (AP1',.... AP5') est équipé de moyens d'interface radio (LSA, RSA, TDA) supportant la communication vers des unités de réseau d'itinérance à l'intérieur de sa cellule, **caractérisé en ce que** le point d'accès (AP1',.... AP5') est équipé de moyens d'interface radio (RSA, LSA TSA) supportant l'intercnmmunication entre les points d'accès voisins/adjacents, le point d'accès (AP1',,..., AP5') comprenant des moyens de commutation (S), des premiers moyens d'interface radio (TDA) intégrés aux moyens de commutation pour supporter des communications entre le point d'accès et une unité de réseau d'itinérance, et de seconds moyens d'interface radio (RSL, LSA) intégrés aux moyens de commutation (S) pour fournir une intercommunication entre les points d'accès voisins/adjacents, où le point d'accès est adapté pour suivre l'unité de réseau d'itinérance (T) avec la logique d'itinérance conventionnelle inversée sur itinérance élevée et liaison faible en déterminant le seuil d'itinérance à une valeur élevée et le seuil de liaison à une valeur faible permettant un transfert intercellulaire rapide (HO).

6. Point d'accès (AP1', ,..., AP5') selon la revendication 5, **caractérisé en ce qu'**il comprend en outre des moyens de contrôle pour le routage de la communication entre les points d'accès et la passerelle via l'intercommunication entre les points d'accès voisins/adjacents.

7. Point d'accès (AP1', , ..., AP5') selon la revendication 6, **caractérisé en ce que** les moyens de contrôle pour le routage de la communication sont adaptés pour suivre l'unité de réseau d'itinérance pour effectuer un transfert intercellulaire rapide ou même prédictif.

8. Procédé de contrôle destiné à contrôler un réseau cellulaire d'accès sans fil à large bande comprenant au moins une passerelle connectée via un réseau d'agrégation à des points d'accès (AP1, ,..., AP5'), le procédé comprenant les étapes de :
- détermination pour une unité de réseau d'itinérance (T) d'au moins un point d'accès (AP1, «....., AP5») de sorte que l'unité de réseau d'itinérance soit située dans la cellule du au moins un point d'accès, et
- routage de la communication entre la passerelle (GW) et l'unité de réseau d'itinérance (T) via le au moins un point d'accès par le réseau d'agrégation,
**caractérisé en ce que** seule une première partie de points d'accès (AP3') sont directement connectés à une passerelle de réseau via le réseau d'agrégation, une seconde partie de points d'accès (AP1', AP2', AP4', AP5') sont indirectement connectés à la passerelle de réseau(GW) via l'intercommunication par au moins un autre point d'accès à un point d'accès de la première partie de points d'accès, le procédé comprenant en outre les étapes de :
- détermination d'un point d'accès de la première partie de points d'accès,
- routage de la communication entre une passerelle et l'unité d'itinérance via l'intercommunication par ledit point d'accès, et
- suivi de l'unité de réseau d'itinérance pour effectuer une détermination rapide du au moins un point d'accès ou du deuxième point d'accès en inversant la logique d'itinérance conventionnelle sur itinérance élevée et liaison faible en déterminant le seuil d'itinérance à une valeur élevée et le seuil de liaison à une valeur faible.

9. Logiciel informatique **caractérisé en ce qu'**il comprend un moyen pouvant être lu par ordinateur, ayant des moyens de code de programme informatique, quand ledit programme est chargé, pour permettre à l'ordinateur d'exécuter la procédure afin d'effectuer le procédé selon la revendication 8.
